## Europäisches Patentamt
## European Patent Office
## Office européen des brevets

(19)

(11) Veröffentlichungsnummer: **0 038 549**

**A1**

(12) # EUROPÄISCHE PATENTANMELDUNG

(21) Anmeldenummer: 81102996.6

(22) Anmeldetag: 18.04.81

(51) Int. Cl.³: **G 01 N 23/225**
G 01 N 21/63, G 01 N 21/62

(30) Priorität: 22.04.80 DE 3015352

(43) Veröffentlichungstag der Anmeldung:
28.10.81 Patentblatt 81/43

(84) Benannte Vertragsstaaten:
BE CH FR GB IT LI NL

(71) Anmelder: Kernforschungsanlage Jülich Gesellschaft
mit beschränkter Haftung
Postfach 1913
D-5170 Jülich(DE)

(72) Erfinder: Hintz, Eduard, Prof. Dr.
Otto-Hahn-Strasse 10
D-5170 Jülich-Stetternich(DE)

(72) Erfinder: Bogen, Peter, Dr.
Nordstrasse 40
D-5170 Jülich(DE)

(72) Erfinder: Mioduszewski, Peter, Dr.
123 Bay Path Drive
Oak Ridge, Tenn. 37830(US)

(72) Erfinder: Rusbüldt, Dankwart, Dr.
Flurstrabe 87
D-5160 Düren(DE)

(72) Erfinder: Schweer, Bernd, Dr.
Freiligrathstrasse 72
D-4130 Moers(DE)

(74) Vertreter: Garbeck, Hans, Dr.-Ing.
Artilleriestrasse 14
D-5170 Jülich(DE)

(54) Verfahren und Vorrichtung zum spektroskopischen Nachweis von an der Oberfläche eines Festkörpers befindlichen Elementen.

(57) Verfahren und Vorrichtung zum Spektroskopischen Nachweis von an der Oberfläche eines Festkörpers befindlichen Elementen

Die Erfindung betrifft eine empfindliche und quantitative Untersuchung von Oberflächen einer im Vakuum befindlichen Probe, in dem geringe Materialmengen von der Oberfläche durch Zerstäubung oder Verdampfung beispielsweise mittels eines Teilchenstrahls, eines gepulsten Mikrobogens oder eines Laserpulses abgetragen werden und die zur Konzentration an der Oberfläche proportionale Dichte der zerstäubten oder verdampften Atome in der Gasphase mittels Fluoreszenzspektroskopie selektiv ermittelt wird. Die Fluoreszenz wird bei Einzelelementen insbesondere mittels eines schmalbandigen abgestimmten Lasers oder beim Nachweis verschiedener Elemente durch mehrere Laser oder eine intensive breitbandige Lichtquelle angeregt. Der Nachweis erfolgt (nach spektraler Zerlegung) durch einen oder mehrere Fotodetektoren. Ein besonderer Vorteil des Verfahrens besteht darin, daß die Nachweisgeräte außerhalb des Vakuumsystems und mehrere Meter von der Probe entfernt sein können. Die Nachweisempfindlichkeit beträgt in einzelnen Fällen bis zu $10^{-5}$ Monolagen, wobei im Prinzip alle Elemente des Periodensystems nachgewiesen werden können.

./...

Croydon Printing Company Ltd.

COMPLETE DOCUMENT

FIG. 1

Kernforschungsanlage Jülich
Gesellschaft mit beschränkter Haftung

0038549

Verfahren und Vorrichtung zum spektroskopischen
Nachweis von an der Oberfläche eines Festkörpers
befindlichen Elementen

Die Erfindung bezieht sich auf ein Verfahren und eine Vorrichtung zum spektroskopischen Nachweis von an der Oberfläche eines Festkörpers befindlichen Elementen, bei dem der Körper, dessen Oberfläche zu untersuchen ist, einem Vakuum ausgesetzt wird. Derartige Untersuchungen sind in zahlreichen physikalischen und technischen Bereichen, beispielsweise in der Halbleitertechnologie, bei Gasentladungen oder chemischen Reaktionen von Bedeutung, bei denen die Zusammensetzung und die Verunreinigung der Materialoberflächen eine entscheidende Rolle spielen. Zweck der Erfindung ist es, ein Verfahren oder eine Vorrichtung zu schaffen, die eine solche chemische Analyse von Festkörperoberflächen ermöglicht, dabei soll insbesondere auch eine geringe Menge von Fremdatomen nachweisbar sein.

Es sind zwar eine Reihe von Verfahren zur Durchführung solcher Untersuchungen bekannt. Von diesen Verfahren und den zu deren Durchführung erforderlichen Vorrichtungen hat eine unter der Bezeichnung Auger-Elektronen-Spektrometer bekannte Vorrichtung besondere Bedeutung erlangt ("Methods of Surface Analyses", Volume I, Methods and Phenomena, Elsevier, Amsterdam, Oxford, New York, 1975, Herausgeber: S.P. Wolsky and A.W. Szanderna, S. 159 ff). Dieses Spektrometer wird zur Analyse von Festkörperoberflächen im Bereich einiger weniger Atomlagen verwendet. Dabei wird die zu untersuchende Oberfläche mittels von einer in einem Vakuumbehälter, in dem auch der zu untersuchende Festkörper angeordnet ist, vorgesehenen Elektronenquelle mit monoenergetischen Elektronen beschossen.

Infolgedessen werden die an der Oberfläche des Körpers befindlichen Atome in einem niedrigen Niveau ionisiert. Das hat die Wirkung, daß ein Elektron aus einem höheren Niveau die Schale, aus der das Elektron freigesetzt worden ist, wieder besetzt. Die aufgrunddessen freiwerdende Energie kann entweder als Photon emittiert (Röntgenfluoreszenz) oder auf ein weiteres Elektron übertragen werden und sodann als sogenanntes Auger-Elektron den Festkörper verlassen. Von dieser Tatsache ausgehend werden bei den bekannten Verfahren die für die chemischen Elemente charakteristischen Energien der Auger-Elektronen ihrer Energie nach analysiert und im Anschluß daran mittels eines ebenfalls innerhalb des Vakuumbehälters angeordneten Sekundärelektronen-Vervielfachers nachgewiesen. Dieses Verfahren ist zwar zum Nachweis aller Elemente mit Ausnahme von Wasserstoff und Helium geeignet, nachteilig ist dabei jedoch, daß der zu untersuchende Körper innerhalb der Vakuumkammer zu dem zur Analysierung der Energie vorgesehenen Energieanalysator in einem weniger als 1 cm betragenden Abstand angeordnet und darüber hinaus sehr genau justiert werden muß, wobei der Genauigkeitsgrad
etwa 0,1 mm betragen muß. Die Nachweisgrenze liegt bei
dieser bekannten Vorrichtung unter günstigen Bedingungen
bei etwa $10^{-3}$ Atomlagen.

Aufgabe der Erfindung ist es, demgegenüber ein Verfahren
und eine Vorrichtung zu schaffen, die die Nachteile der
bisher bekannten Maßnahmen vermeidet, darüber hinaus ermöglicht, daß die Untersuchungen durch elektromagnetische Felder nicht gestört werden können und daß insbesondere die Nachweisgeräte auch in größerer Entfernung
zu dem zu untersuchenden Körper außerhalb des Vakuumbehälters angeordnet werden können.

Diese Aufgabe wird gemäß der Erfindung bei einem Verfahren der eingangs bezeichneten Art dadurch gelöst, daß
mittels eines energetischen Teilchenstrahles, Mikrobogens oder Lasers eine geringe Menge der an der Oberfläche
befindlichen Elemente zerstäubt bzw. verdampft werden,
die zerstäubten oder verdampften Elemente sodann mittels
eines Lasers, mehrerer Laser oder einer intensiven breitbandigen Lichtquelle zur Fluoreszenz angeregt und die
Fluoreszenzstrahlung spektral zerlegt und durch einen
oder mehrere Photodetektoren nachgewiesen wird.

Die Erfindung geht dabei von der Erkenntnis aus, daß
die Dichte der zerstäubten oder verdampften Elemente
in der Gasphase proportional ihrer Konzentration an der

0038549

- 4 -

Oberfläche des zu untersuchenden Körpers ist, so daß sie mittels Fluoreszenzspektroskopie quantitativ nachweisbar ist. Die Fluoreszenzstrahlung wird also bei dem Verfahren gemäß der Erfindung spektral zerlegt durch einen oder mehrere Photodetektoren nachgewiesen, wobei als Photodetektoren beispielsweise Sekundärelektronen-Vervielfacher verwendet werden.

Wird zum Zerstäuben der an der Oberfläche befindlichen Elemente ein Teilchenstrahl benutzt, so hat es sich als sehr vorteilhaft erwiesen, einen Argonionenstrahl zu verwenden. Eine bevorzugte Ausgestaltung des Verfahrens gemäß der Erfindung besteht darin, daß der Lichtbogen, der Teilchenstrahl oder der Laserstrahl gepulst sind.

Wie nachgewiesen werden konnte, sind durch Anwendung des erfindungsgemäßen Verfahrens auch Wasserstoffmoleküle oder -atome nachweisbar.

Wird, wie dies nach dem Verfahren gemäß der Erfindung vorgesehen ist, in etwa 1 cm Abstand vor der Oberfläche des zu untersuchenden Körpers, auf der die Zerstäubung oder Verdampfung vorgenommen worden war, parallel zu der Oberfläche ein gepulster Laserstrahl gerichtet, der auf die Resonanzlinie des zu untersuchenden Elementes abgestimmt ist, so werden die zerstäubten oder verdampften Atome dieses Elements infolgedessen angeregt. Das von diesem emittierte Licht wird zweckmäßig senkrecht zum Ionenstrahl und zu dem Laserstrahl mit einem entsprechenden optischen Detektor nachgewiesen. Dabei hat sich gezeigt, daß ohne weiteres noch $10^5$ Eisenatome je $cm^3$ nachweisbar sind. Das bedeutet, daß auch sehr geringe

- 5 -

Konzentrationen nachweisbar sind, für Eisen beispielsweise eine Konzentration von 10ppm Eisenatomen in der Wolke der zerstäubten Teilchen.

Daraus geht der große Vorzug des Verfahrens gemäß der Erfindung gegenüber den bisher bekannten Maßnahmen hervor, da, wie am Beispiel des Nachweises von Eisen gezeigt, eine Nachweisempfindlichkeit von $10^{-5}$ Monolagen erzielbar ist.

Ausführungsbeispiel

Zum Nachweis von Eisen auf der Oberfläche einer stark oxidierten Chrom-Nickel-Stahlprobe wurde ein Argonionenstrahl mit einer Stromdichte von etwa 1 mA/cm$^2$ und einer Teilchenenergie von 3 keV auf die zu untersuchende Oberfläche der Probe gerichtet. Es zeigte sich, daß je einfallendem Teilchen ein Oberflächenatom freigesetzt wurde. Nachweisbar verließen etwa $6 \cdot 10^{15}$ durch den Ionenstrahl zerstäubte Atome je cm$^2$ und Sekunde die Oberfläche der Probe. Die mittlere Geschwindigkeit der zerstäubten Atome betrug, wie gleichzeitig nachgewiesen wurde, $3 \cdot 10^5$ cm/sec. Vor der zerstäubten Oberfläche der Probe bildete sich somit eine Eisendampfdichte von $2 \cdot 10^{10}$ cm$^{-3}$.

Für die Durchführung des Verfahrens gemäß der Erfindung hat es sich als zweckmäßig erwiesen, die Pulslänge des Ionenstrahls so zu wählen, daß einerseits die Dichte der nachzuweisenden Teilchen im Streuvolumen möglichst groß ist, andererseits die Oberfläche möglichst wenig zerstört wird. Beträgt bei Stromdichten von 1 mA/cm$^2$ die Pulslänge etwa 10 μs, so werden

von der Oberfläche lediglich etwa $10^{-4}$ Monolagen abgetragen. Andererseits haben die zerstäubten oder verdampften Elemente der Oberfläche aufgrund der ihnen zukommenden Geschwindigkeit von etwa $3 \cdot 10^{5}$ cm/sec dennoch innerhalb der vorgezeichneten Zeitspanne lediglich eine Wegstrecke von einigen wenigen Zentimetern zurückgelegt. Die Teilchendichte innerhalb des Streuvolumens hat somit insofern einen optimalen Wert erreicht, als auch bei einer Verlängerung der Einstrahlungsdauer dieser Wert nicht mehr vergrößert wird, die Meßgenauigkeit somit ebenfalls optimal ist.

Eine besonders vorteilhafte Vorrichtung zur Durchführung des Verfahrens gemäß der Erfindung, bei der ein Vakuumbehälter zur Aufnahme des Körpers, dessen Oberfläche untersucht werden soll, vorgesehen ist, besteht darin, daß in dem Vakuumbehälter eine Ionenquelle mit einem auf die zu untersuchende Oberfläche gerichteten Teilchenstrahl oder ein gepulster Lichtbogen vorgesehen ist, daß außerhalb des Vakuumbehälters ein abstimmbarer Laser so angeordnet ist, daß der von ihm emittierte Lichtstrahl in einem Abstand von etwa 1 cm parallel zu der zu untersuchenden Oberfläche verläuft, und daß zum Nachweis des infolge Anregung des von den zerstäubten oder verdampften Elementen ausgesandten Lichts außerhalb des Vakuumbehälters ein optischer Detektor vorgesehen ist.

Zweckmäßig ist in dem Strahlengang von den angeregten Elementen zum Detektor ein Abbildungssystem angeordnet.

Eine andere Ausführungsform der Vorrichtung zur Durchführung des Verfahrens gemäß der Erfindung, bei der ein Vakuumbehälter zur Aufnahme des Körpers, dessen Oberfläche untersucht werden soll, vorgesehen ist, besteht darin, daß außerhalb des Vakuumbehälters ein Laser mit einem auf die Oberfläche des zu untersuchenden Körpers gerichteten intensiven Laserstrahl vorgesehen ist, daß außerhalb des Vakuumbehälters ein abstimmbarer Laser so angeordnet ist, daß der von ihm emittierte Lichtstrahl in einem Abstand von etwa 1 cm parallel zu der zu untersuchenden Oberfläche verläuft, und daß zum Nachweis des infolge Anregung von den zerstäubten oder verdampften Elementen ausgesandten Lichts außerhalb des Vakuumbehälters ein optischer Detektor vorgesehen ist.

Um bei der Untersuchung bestimmte Elemente herauszufiltern, ist es zweckmäßig, daß dem optischen Detektor ein spektrales Filter vorgeschaltet ist.

Diese Ausführungsform hat den großen Vorzug, daß alle zur Durchführung der Untersuchung erforderlichen Einrichtungen außerhalb des Vakuumbehälters liegen.

Zusammengefaßt bestehen die Vorteile des Verfahrens und der Vorrichtung gemäß der Erfindung darin, daß die Oberflächenanalysen "in situ" durchführbar sind und daß die erforderlichen Nachweisgeräte außerhalb des Vakuumbehälters und ohne weiteres mehrere Meter von der Probe entfernt angeordnet sein können. Sie haben ferner den Vorteil, daß die Innenfläche des Vakuumbehälters selbst untersucht werden kann. Ein ganz besonderer Vorzug besteht darin, daß der Analysenablauf nur einen sehr geringen Zeitaufwand (< 1o $\mu$s) beträgt und infolgedessen Analysen in sehr kurzen Zeitabständen durchführbar sind. Die Nachweisempfindlichkeit ist hoch, außerdem kann die Analyse quantitativ durchgeführt werden und ist auf alle Elemente des periodischen Systems, deren Nachweis in der Praxis von Bedeutung ist, anwendbar.

Für eine empfindliche Analyse der Oberfläche, bei der nur wenige Atomlagen in die Analyse einbezogen werden, eignet sich als Teilchenstrahl z.B. ein insbesondere gepulster Argonionenstrahl von etwa $1o^{15}$ $Ar^+/cm^2$ s mit einem "Brennfleck" von etwa 5 $mm^2$. Die Energie dieser Argonionen sollte zwischen o,1 und 5 keV und insbesondere zwischen o,5 und 1 keV liegen.

Als Mikrobogen dient insbesondere ein gepulster Bogen, dessen Stärke und Dauer von der gewünschten Eindringtiefe abhängen. Zweckmäßig sind Stromstärken über 1 Ampere und insbesondere zwischen 1o und 1oo Ampere sowie Pulsdauern von etwa 1/1o $\mu$s.

Die Zerstäubung oder Verdampfung von Oberflächenatomen mit einem Laserstrahl erfolgt zweckmäßigerweise ebenfalls mit einem gepulsten Laser von beispielsweise um 5oo $kW/mm^2$ bei einer Pulsdauer von 1o ns. Selbstverständlich hängt auch hier der von der Untersuchung erfaßte Tiefenbereich der Oberfläche von der Pulsdauer ab, die zwischen 1 und $1o^3$ ns liegen könnte und mit der gewählten Strahlintensität zusammenhängt, die je nach Material zwischen etwa o,1 und 1 $MW/mm^2$ liegen kann.

Die Vorrichtung gemäß der Erfindung wird im folgenden anhand von zwei in der Zeichnung schematisch dargestellten Ausführungsbeispielen dargestellt. Es zeigen

Figur 1    eine Vorrichtung unter Verwendung einer Ionenquelle zum Zerstäuben der Oberflächenelemente

Figur 2    eine Teilansicht der Vorrichtung gemäß Figur 1 mit einer zum Verdampfen der Oberflächenelemente vorgesehenen Bogenentladung.

Wie aus der Zeichnung hervorgeht, wird der Festkörper 1, dessen Oberfläche untersucht werden soll, in einem Vakuumbehälter 2, der mit einer Vakuumpumpe verbunden ist, angeordnet. An dem Vakuumbehälter 2 ist eine Ionenquelle 3 so angeordnet, daß der von ihr ausgesandte Teilchenstrahl auf den vorbestimmten Bereich der Oberfläche des Festkörpers 1 fällt. Infolge des auftreffenden Teilchenstrahls werden die an der Oberfläche befindlichen Atome zerstäubt. Auf die Oberfläche des zu untersuchenden Körpers 1 wird der von einem Farbstofflaser 5 ausgehende Laserstrahl so gerichtet, daß er parallel zu der Oberfläche des zu untersuchenden Körpers 1 etwa in einem Abstand von 1 cm verläuft. Zu diesem Zweck ist im Strah - lengang des Farbstofflasers 5 in der Wandung des Vakuumbehälters 2 ein Fenster angeordnet. Der Farbstofflaser 5 ist so ausgewählt, daß der Wellenbereich seiner Strahlung den Resonanzlinien der nachzuweisenden Elemente entspricht.

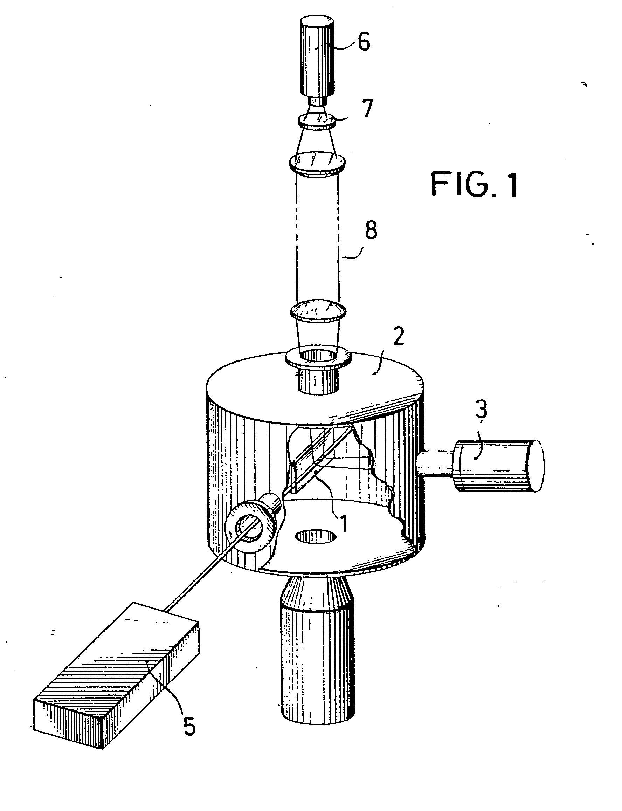

Außerhalb des Vakuumbehälters 2 ist ferner ein Photodetektor 6 so angeordnet, daß von ihm die infolge der Anregung durch die Strahlung des Farbstofflasers 5 hervorgerufene Fluoreszenzstrahlung aufgenommen wird. Zu diesem Zweck ist im Strahlengang zwischen Fluoreszenzstrahlung und Detektor 6 in der Wandung des Vakuumbehälters 2 ebenfalls ein Fenster vorgesehen. Zweckmäßig liegt in diesem Strahlengang ein Abbildungssystem 8, um bei der Untersuchung bestimmte Elemente herauszufiltern - wie in Figur 1 dargestellt - ein spektrales Filter 7.

Anstelle der Ionenquelle 3 ist es ohne weiteres möglich, einen Laser zum Verdampfen der Oberflächenelemente vorzusehen. In diesem Fall ist, da der Laser zweckmäßig außerhalb des Vakuumbehälters 2 angeordnet wird, im Strahlengang des von ihm ausgesandten Laserstrahls in der Wandung des Vakuumbehälters 2 ebenfalls ein Fenster vorgesehen.

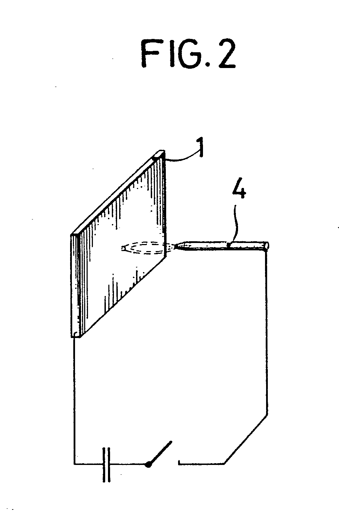

Aus Figur 2 ist zu entnehmen, wie für den Fall der Anordnung einer Bogenentladung 4 zum Verdampfen der Oberflächenelemente der Oberfläche des zu untersuchenden Festkörpers 1 die Bogenentladung 4 innerhalb des in

Figur 2 nicht dargestellten Vakuumbehälters 2 angeordnet ist. In Figur 2 bedeuten C den innerhalb des Stromkreises, in dem die Bogenentladung 4 liegt, angeordneten Kondensator, S den zur Entladung betätigbaren Schalter.

Patentansprüche

1. Verfahren zum spektroskopischen Nachweis von an der Oberfläche eines Festkörpers befindlichen Elementen, bei dem der Körper, dessen Oberfläche zu untersuchen ist, einem Vakuum ausgesetzt wird, d a d u r c h  g e - k e n n z e i c h n e t, daß mittels eines energeti- schen Teilchenstrahles, Mikrobogens oder Lasers eine geringe Menge der an der Oberfläche befindlichen Elemente zerstäubt bzw. verdampft werden, die zerstäubten oder verdampften Elemente sodann mittels eines Lasers, mehrerer Laser oder einer intensiven breitbandigen Lichtquelle zur Fluoreszenz angeregt und die Fluoreszenzstrahlung spektral zerlegt und durch einen oder mehrere Photodetektoren nachgewiesen wird.

2. Verfahren nach Anspruch 1 d a d u r c h  g e k e n n - z e i c h n e t, daß als Teilchenstrahl zum Zerstäuben der an der Oberfläche befindlichen Elemente ein Argonionenstrahl verwendet wird.

3. Verfahren nach Anspruch 1 oder 2 d a d u r c h  g e - k e n n z e i c h n e t, daß der Lichtbogen, der Teilchenstrahl oder der Laserstrahl gepulst sind.

4. Vorrichtung zur Durchführung des Verfahrens nach einem der Ansprüche 1 bis 3, bei der ein Vakuumbehälter zur Aufnahme des Körpers, dessen Oberfläche untersucht werden soll, vorgesehen ist, d a d u r c h  g e k e n n - z e i c h n e t, daß in dem Vakuumbehälter eine Ionenquelle (3) mit einem auf die zu untersuchende Oberfläche gerichteten Teilchenstrahl oder ein gepulster Lichtbogen (4) vorgesehen ist, daß außerhalb des Vakuumbehälters (2) ein abstimmbarer Laser (5) so angeordnet ist,
daß der von ihm emittierte Lichtstrahl in einem Abstand
von etwa 1 cm parallel zu der zu untersuchenden Oberfläche verläuft, und daß zum Nachweis des infolge Anregung des von den zerstäubten oder verdampften Elementen ausgesandten Lichts außerhalb des Vakuumbehälters (2)
ein optischer Detektor (6) vorgesehen ist.

5. Vorrichtung zur Durchführung des Verfahrens nach einem
der Ansprüche 1 bis 3, bei der ein Vakuumbehälter zur
Aufnahme des Körpers, dessen Oberfläche untersucht werden soll, vorgesehen ist, d a d u r c h   g e k e n n -
z e i c h n e t, daß außerhalb des Vakuumbehälters ein
Laser mit einem auf die Oberfläche des zu untersuchenden Körpers gerichteten intensiven Laserstrahl vorgesehen ist, daß außerhalb des Vakuumbehälters (2) ein
abstimmbarer Laser (5) so angeordnet ist, daß der von
ihm emittierte Lichtstrahl in einem Abstand von etwa
1 cm parallel zu der zu untersuchenden Oberfläche verläuft, und daß zum Nachweis des infolge Anregung von
den zerstäubten oder verdampften Elementen ausgesandten
Lichts außerhalb des Vakuumbehälters (2) ein optischer
Detektor (6) vorgesehen ist.

6. Vorrichtung nach Anspruch 4 oder 5 d a d u r c h
g e k e n n z e i c h n e t, daß dem optischen Detektor (6) ein spektrales Filter (7) vorgeschaltet ist.

1/2

FIG. 1

# FIG.2

0038549

**Europäisches Patentamt**

**EUROPÄISCHER RECHERCHENBERICHT**

Nummer der Anmeldung

EP 81 10 2996

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | APPLIED OPTICS, Band 18, Nr. 3, 1. Februar 1979 New York, US R. MEASURES et al.: "TABLASER: trace element analyser based on laser ablation and selectively excited radiation", Seiten 281-286 <br><br> * Seiten 281-283 * <br><br> -- | 1,3,4, 6 | G 01 N 23/225 <br> 21/63 <br> 21/62 |
| A | A. CZANDERNA: "METHODS OF SURFACE ANALYSIS", 1975 Vg Elsevier S.P.C. Amsterdam, NL Ch. 2. Teil II-C "A comparison of the methods of surface analysis and their applications: Ions in", Seiten 52-58 <br><br> * Seiten 52-56,57 * <br><br> -- | 1,2 | |

**RECHERCHIERTE SACHGEBIETE (Int. Cl.³)**

G 01 N 23/225
       21/63
       21/64
H 01 J 27/02
G 01 N 21/62

| | | | |
|---|---|---|---|
| A | APPLIED PHYSICS LETTERS, Band 35, Nr. 10, 15.November 1979 New York, US E. MIRON et al.: "Laser fluorescence spectroscopy of atomic Uranium using a pulsed hollow cathode lamp as a vapor source", Seiten 737-738 <br><br> * Insgesamt * <br><br> -- | 1 | |
| A | ANALYTICAL CHEMISTRY, Band 49, nr. 1, Januar 1977 Washington, DC, US N. TOLK et al.: "In situ spectrochemical analysis of solid surfaces by Ion beam sputtering" Seiten 16(A)-30(A) <br><br> * Seiten 16(A)-18(A) * <br><br> -- ./. | 1,2 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-07-1981 | BOEHM |

EPA form 1503.1 06.78

| | Europäisches Patentamt | **EUROPÄISCHER RECHERCHENBERICHT** | | |

| **EINSCHLÄGIGE DOKUMENTE** | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | SURFACE SCIENCE, Band 90, 1979, Vg. North Holland P.C, Amsterdam, NL<br>G. THOMAS: "Bombardment induced light emission" Seiten 381-416<br><br>  * Seiten 381-383, 391-392, 395-397 *<br><br>---- | 1 | |
| | | | **RECHERCHIERTE SACHGEBIETE (Int. Cl. 3)** |

EPA Form 1503.2  06.78